# FASCICULE DE BREVET EUROPEEN

(11) **EP 3 283 311 B1**
(45) Date de publication et mention de la délivrance du brevet: **05.06.2019**
(21) Numéro de dépôt: 16719343.2
(22) Date de dépôt: 18.04.2016
(51) Int. Cl.: F28F 3/04, F28F 21/06, F28D 1/03, B60H 1/00, F28D 21/00, F28D 20/02, F28D 20/00

(54) **TUBE À RÉSERVOIR DE MATÉRIAU À CHANGEMENT DE PHASE POUR ÉCHANGEUR DE CHALEUR.**
ROHR MIT PHASENWECHSELMATERIALSPEICHER FÜR EINEN WÄRMETAUSCHER
TUBE WITH A CONTAINER FOR PHASE CHANGE MATERIAL FOR A HEAT EXCHANGER

(30) Priorité: 16.04.2015 FR 1553381
(43) Date de publication de la demande: 21.02.2018
(73) Titulaire: Valeo Systemes Thermiques, 78320 Le Mesnil-Saint-Denis (FR)
(72) Inventeur: MOREAU, Sylvain, 72700 Spay (FR); TISON, Frédéric, 72230 Guecelard (FR); BUSSON, François, 72220 Saint-Gervais-en-Belin (FR); ROBILLON, Lionel, 72230 Mulsanne (FR)
(74) Mandataire: Tran, Chi-Hai
(86) Numéro de dépôt international: PCT/EP2016/058584
(87) Numéro de publication internationale: WO 2016/166378

(56) Documents cités:
- EP-A1- 2 846 120
- WO-A1-2010/150774

## Description

La présente invention concerne un tube à réservoir de matériau à changement de phases pour faisceau d'échange de chaleur d'échangeur de chaleur, notamment dans le domaine de la gestion thermique au sein d'un véhicule automobile.

Les échangeurs de chaleur comprennent généralement un faisceau de tubes parallèles formés de plaques contenant un premier fluide caloporteur, par exemple un fluide réfrigérant dans le cas d'un évaporateur de circuit de climatisation. Le faisceau est également traversé par un second fluide caloporteur, par exemple un flux d'air destiné à l'habitacle, balayant les tubes dont la surface, augmentée par l'ajout de perturbateurs ou intercalaires entre les tubes, optimise l'échange thermique.

Il est connu de pourvoir ces échangeurs de chaleur de réservoirs de matériau à changement de phases associés aux tubes du faisceau servant à la circulation du premier fluide caloporteur. De tels échangeurs par exemple dans le cas d'un évaporateur d'un circuit de climatisation, permettent de maintenir le refroidissement d'un habitacle du véhicule pendant une période de temps donnée notamment lorsque le moteur du véhicule est à l'arrêt et n'entraîne plus le compresseur de mise en circulation du fluide réfrigérant, notamment pour les véhicules munis d'un système d'arrêt automatique du moteur lors des arrêts courts du véhicule. Dans ces périodes d'arrêt du moteur, le matériau à changement de phases capte de l'énergie calorifique à l'air traversant l'évaporateur de sorte à le refroidir.

Il est ainsi connu en particulier un évaporateur pour circuit de climatisation de véhicule, comprenant un faisceau d'échange de chaleur pourvu d'un ensemble de tubes de circulation du fluide réfrigérant, un réservoir de stockage de matériau à changement de phases étant accolé aux tubes et un passage d'air étant prévu entre les tubes et les réservoirs de stockage de froid, notamment par des protusions et récessions formées entre ces derniers. Dans de tels échangeurs le transfert thermique entre les tubes dans lesquels circule le fluide réfrigérant et les réservoirs de matériau à changement de phases est réduit d'une part, par l'existence des dites protusions et récessions s'étendant sur une surface importante de chacun des tubes et d'autres part, par l'épaisseur de matière impliquée dans le transfert thermique du tube au réservoir. En effet, celle-ci comprend la paroi du tube et la paroi du réservoir.

Un des buts de la présente invention est de remédier au moins partiellement aux inconvénients de l'art antérieur et de proposer un tube à réservoir de matériau à changement de phases amélioré pour une utilisation plus efficace au sein d'un faisceau d'échange de chaleur d'un échangeur de chaleur.

Le document WO10150774A1 décrit un tube selon le préambule de la revendication 1. En particulier, il décrit un evaporateur avec fonction de stockage de froid qui comporte: une premiere unite de tube d'écoulement de refrigerant plate, agencee a des intervalles et avec une direction transversale de ladite unite dirigee dans la direction de ventilation; une seconde unite de tube d'écoulement de refrigerant plate, disposee sur le cote en aval de la premiere unite de tube d'écoulement de refrigerant et agencee a des intervalles et avec la direction transversale de ladite seconde unite de tube d'écoulement de refrigerant dirigee dans la direction de ventilation; et une unite de tube remplie de milieu de stockage de froid plate, dans laquelle un milieu de stockage de froid (P) est introduit, et qui est agencee, avec la direction transversale de ladite unite de tube remplie dirigee dans la direction de ventilation et entre deux unites de tube d'ecoulement de refrigerant adjacentes, en contact avec l'une ou l'autre de celles-ci. Cet evaporateur avec fonction de stockage de froid peut empecher une chute d'efficacite de stockage de froid.

La présente invention concerne donc un tube à réservoir de matériau à changement de phase pour faisceau d'échange de chaleur d'un échangeur de chaleur, ledit tube à réservoir de matériau à changement de phase comportant :
- deux plaques de circulation configurées pour être assemblées l'une à l'autre de façon étanche et former au moins un conduit dans lequel circule un premier fluide caloporteur,
- au moins une plaque réservoir, ladite plaque réservoir étant configurée pour venir s'assembler de façon étanche sur une face externe d'une des deux plaques de circulation de sorte à former des logements du matériau à changement de phase,
ledit tube à réservoir de matériau à changement de phase comportant en outre un canal de remplissage du matériau à changement de phase, une extrémité dudit canal de remplissage débouchant sur un des bords dudit tube à réservoir de matériau à changement de phase, ledit canal de remplissage étant formé d'une part par un bec de remplissage de la plaque réservoir vers l'extérieur et d'autre part par la face externe d'une des deux plaques de circulation, ledit canal de remplissage comportant en outre un bouchon, ledit canal de remplissage et ledit bouchon étant contenus dans un volume de largeur inférieure ou égale à la largeur du tube à réservoir de matériau à changement de phase et de hauteur inférieure ou égale à la hauteur des logements du matériau à changement de phase.

De ce fait, le canal de remplissage ne dépasse ni en largeur ni en hauteur du tube à réservoir de matériau à changement de phase. Ainsi lorsque ledit tube à réservoir de matériau à changement de phase est intégré au sein d'un faisceau d'échange de chaleur, le canal de remplissage de dépasse pas et ne gêne pas.

Selon un aspect de l'invention, le canal de remplissage comporte une butée.

Selon un autre aspect de l'invention, le bouchon est réalisé en métal.

Selon un autre aspect de l'invention, les plaques de circulation ainsi que la plaque réservoir sont en métal et fixées entre elles par brasage, ledit bouchon métallique étant également fixé lors du brasage desdites plaques entre elles.

Selon un autre aspect de l'invention, le bouchon est réalisé en matériau élastomère ou plastique.

Selon un autre aspect de l'invention, le bouchon est de taille supérieure à celle du canal de remplissage de sorte à être comprimé à l'intérieur dudit canal de remplissage.

Selon un autre aspect de l'invention, le canal de remplissage comporte une languette de maintien rabattue sur l'extrémité dudit canal de remplissage débouchant sur un des bords du tube à réservoir de matériau à changement de phase.

Selon un autre aspect de l'invention, la languette de maintien vient de matière avec la plaque réservoir.

Selon un autre aspect de l'invention, le bouchon comporte un orifice de remplissage.

Selon un autre aspect de l'invention, lorsqu'elle est rabattue, la languette de maintien recouvre l'orifice de remplissage du bouchon.

Selon un autre aspect de l'invention, la languette de maintien comporte une projection destinée à venir s'insérer au moins partiellement dans l'orifice de remplissage du bouchon lorsque ladite languette de maintien est rabattue.

Selon un autre aspect de l'invention, le tube à réservoir de matériau à changement de phase comporte une pâte de scellement et d'étanchéité entre le bec de remplissage de la plaque réservoir et le bouchon.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective d'un tube à réservoir de matériau à changement de phase éclaté,
- la figure 2 montre une représentation schématique en perspective du tube à réservoir de matériau à changement de phase de la figure 1 assemblé,
- la figure 3 montre une représentation schématique en perspective d'un tube à réservoir de matériau à changement de phase selon un mode de réalisation particulier,
- la figure 4 montre une représentation schématique en coupe d'une portion de tube à réservoir de matériau à changement de phase,
- la figure 5 montre une représentation schématique en coupe d'une portion de tube à réservoir de matériau à changement de phase selon un autre mode de réalisation,
- la figure 6 montre une représentation schématique en perspective d'un tube à réservoir de matériau à changement de phase selon le mode de réalisation de la figure 5,
- la figure 7 montre une représentation schématique en perspective d'un assemblage de tubes dans un faisceau d'échange de chaleur,
- la figure 8 montre une représentation schématique d'un faisceau d'échange de chaleur,
- la figure 9 montre une représentation schématique en perspective d'un canal de remplissage d'un tube à réservoir de matériau à changement de phase,
- la figure 10 montre une représentation schématique en perspective et éclatée d'un canal de remplissage d'un tube à réservoir de matériau à changement de phase,
- les figures 11a, 11b montrent des représentations schématiques en perspective et en vue de dessous d'un canal de remplissage d'un tube à réservoir de matériau à changement de phase lors de différentes étapes de montage.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

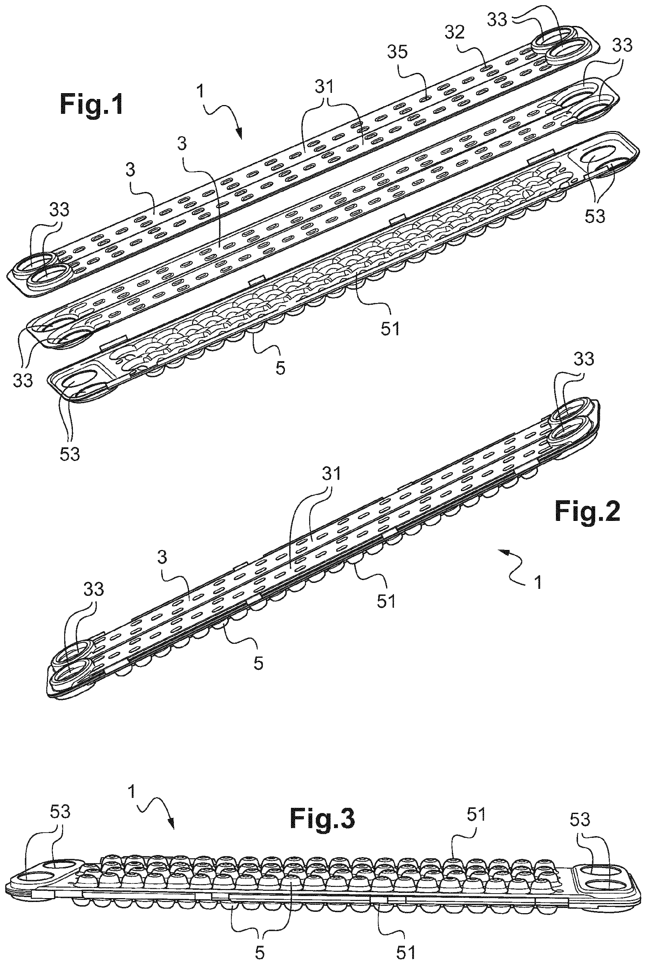

Comme le montre la figure 1, le tube à réservoir de matériau à changement de phase 1 comporte deux plaques de circulation 3 et au moins une plaque réservoir 5. Les deux plaques de circulation 3 sont configurées pour être assemblées l'une à l'autre de façon étanche et pour former au moins un conduit 31 dans lequel circule un premier fluide caloporteur entre lesdites plaques de circulation 3. Les deux plaques de circulations 3 sont de préférence identiques et accolées l'une à l'autre en « miroir », ce qui permet de n'avoir qu'un seul type de plaque de circulation 3 à produire et donc permet d'effectuer des économies lors de la production.

L'au moins une plaque réservoir 5 comporte quant à elle des cavités 51 et est configurée pour venir s'assembler de façon étanche sur une face externe d'une des deux plaques de circulation 3 de sorte à refermer les cavités 51 et former des logements du matériau à changement de phase. Ces cavités 51 sont saillantes sur la face externe de la plaque réservoir 5 de sorte qu'un second fluide caloporteur, par exemple un flux d'air, puisse circuler entre lesdites cavités 51.

Afin de réaliser le tube à réservoir de matériau à changement de phase 1, il n'y a que deux types différents de plaques utilisées, à savoir deux plaques de circulation 3 et au moins une plaque réservoir 5. Une telle conception permet de limiter la production d'un tel tube à réservoir à ces deux types de plaques, engendrant par conséquent des économies dans les coûts de production. De plus, de par ce nombre réduit de types de plaques, le montage est simplifié.

Un avantage supplémentaire du tube à réservoir de matériau à changement de phase 1 est que le matériau à changement de phase est directement au contact de la plaque de circulation 3, ce qui facilite et améliore les échanges d'énergie calorifique entre le premier fluide caloporteur et le matériau à changement de phase.

Comme le montrent les figures 1, 4 et 5, les plaques de circulation 3 peuvent également comprendre des creux 32 réalisées de préférence par emboutissage selon une répartition homogène sur l'intégralité de la plaque de circulation 3. Les plaques de circulation 3 comprennent une face externe destinée à être orientée vers soit une plaque réservoir 5, soit un élément d'échange thermique avec le second fluide caloporteur, telle une plaque ondulée. Chaque plaque de circulation 3 comprend une face interne opposée à la face externe depuis laquelle s'étend chaque creux 32 de telle sorte que leur partie sommitale est en contact avec la plaque adjacente de circulation 3.Selon un mode de réalisation préféré, mais non limitatif, les creux 32 sont répartis en quinconce sur la plaque de circulation 3. Du fait d'une telle répartition, la face intérieure de chaque creux 32 se trouve dans la voie d'écoulement du premier fluide délimitée par le conduit 31, tandis que la face extérieure peut former une réserve locale de matériau à changement de phase, augmentant de la sorte leur échange thermique.

Du fait que la face externe de la plaque de circulation 3 est pourvue de creux 32, ces derniers forment des réserves complémentaires de matériau à changement de phase de sorte que pour un encombrement donné, un tube à réservoir 5 de matériau à changement de phase pourvu de telles creux 32 permet un stockage augmenté de matériau à changement de phase. Cela a pour effet d'augmenter le temps durant lequel le matériau à changement de phase échange de l'énergie calorifique avec le second fluide.

En outre, compte tenu du fait que les creux 32 forment des liaisons supplémentaires avec la plaque adjacente de circulation 3, la tenue mécanique du tube à réservoir de matériau à changement de phase 1 est augmentée. Par voie de conséquent un tel tube à réservoir de matériau à changement de phase 1 peut être utilisé dans un échangeur de chaleur du type d'un évaporateur qui est apte à recevoir un fluide réfrigérant dont la pression a une valeur nominale d'approximativement 15 bar.

Comme le montre la figure 2, le tube à réservoir de matériau à changement de phase 1 comporte une plaque réservoir 5 unique, sur une de ses faces externes en contact avec le second fluide caloporteur. L'autre de ses faces est en contact avec une plaque ondulée d'échange thermique avec le second fluide caloporteur, une telle plaque ondulée étant parfois qualifiée d'ailette ou d'intercalaire.

Selon une variante de réalisation, le tube 1 peut néanmoins comporter une plaque réservoir à réservoir de matériau à changement de phase 1 sur chacune de ses faces externes en contact avec le second fluide caloporteur comme cela est montré sur la figure 3. Afin de faciliter le remplissage des cavités saillantes 51 dans ce mode de réalisation, le tube à réservoir de matériau à changement de phase 1 peut comporter un orifice de remplissage (non représenté) commun des cavités saillantes 51 des deux plaques réservoirs 5.

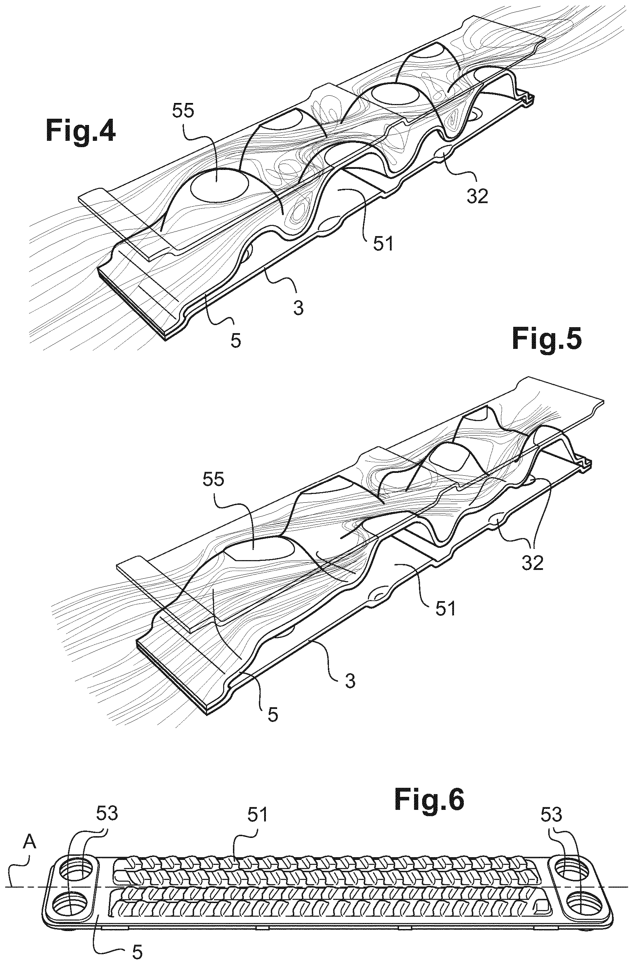

Selon un premier mode de réalisation illustré à la figure 4, les cavités saillantes 51 ont une forme en dôme. Ces dômes sont plus particulièrement disposés en quinconce afin que le second fluide caloporteur puisse circuler entre eux.

Selon un second mode de réalisation illustré à la figure 5, les cavités saillantes 51 ont une forme oblongue. Les cavités saillantes 51 sont alors réparties en « V » par rapport à l'axe longitudinal A de la plaque réservoir 5 comme le montre la figure 6. Cette forme et cette répartition particulière permettent au tube à réservoir de matériau à changement de phase 1 de contenir une quantité de matériau à changement de phase plus importante que pour la forme en dôme et permettent également de limiter les pertes de charge du second fluide caloporteur lors de son passage entre les cavités saillantes 51.

Les cavités saillantes 51, que se soit selon le premier ou le second mode de réalisation, ont un sommet 55 plat respectivement de section cylindrique et de section polygonale, par exemple approximativement trapézoïdale.

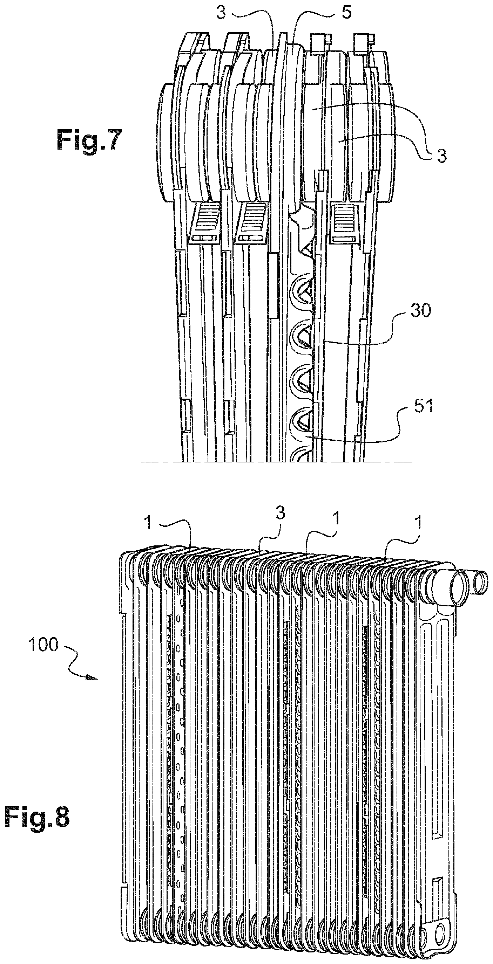

De tels sommets 55 sont destinés à entrer en contact avec un tube d'échange 30 disposé en vis-à-vis au sein du faisceau d'échange de chaleur 100, comme cela est montré sur la figure 7.

Le tube d'échange 30 peut être un tube pourvu de micro canaux, un tel tube étant issu de la superposition de plaques planes et d'une plaque ondulée, cette dernière étant parfois qualifiée d'intercalaire interne, ladite plaque ondulée étant alors disposée entre les deux plaques planes adjacentes afin de former les micro-canaux.

Selon une variante de réalisation, le tube d'échange 30 peut plus particulièrement être composé de deux plaques de circulation 3, telles qu'elles ont été décrites précédemment, assemblées l'une à l'autre de façon étanche.

La figure 8 montre un faisceau d'échange de chaleur 100 comportant des tubes à réservoir de matériau à changement de phase 1 afin de former à terme, un échangeur de chaleur. Le faisceau d'échange de chaleur 100 comporte ici, réparti sur toute sa longueur, trois tubes à réservoir de matériau à changement de phase 1. Deux de ces tubes à réservoir de matériau à changement de phase 1 comportent une plaque réservoir 5 sur chacune de leurs faces externes en contact avec le second fluide caloporteur. Le troisième tube à réservoir de matériau à changement de phase 1 ne comporte quant à lui qu'une seule plaque réservoir 5 sur une de ses faces externes en contact avec le second fluide caloporteur. Le nombre total de tubes à réservoir de matériau à changement de phase 1 et de plaques réservoir 5 présents au sein d'un faisceau d'échange de chaleur 100 est fonction de sa taille et de sa longueur. Plus le faisceau d'échange de chaleur 100 est long, plus ce nombre est important afin d'assurer un refroidissement du second fluide caloporteur continue et ce même si le premier fluide caloporteur de circule plus dans ledit faisceau, par exemple lors d'un arrêt du compresseur.

Ainsi, on voit bien que le tube à réservoir de matériau à changement de phase 1 du fait qu'il soit composé de deux plaques de circulation 3 et d'au moins une plaque réservoir 5, permet un montage simple et une fabrication peu coûteuse. De plus, le matériau à changement de phase est directement au contact de la plaque de circulation 3 ce qui facilité et améliore les échanges d'énergie calorifique entre le premier fluide caloporteur et le matériau à changement de phase.

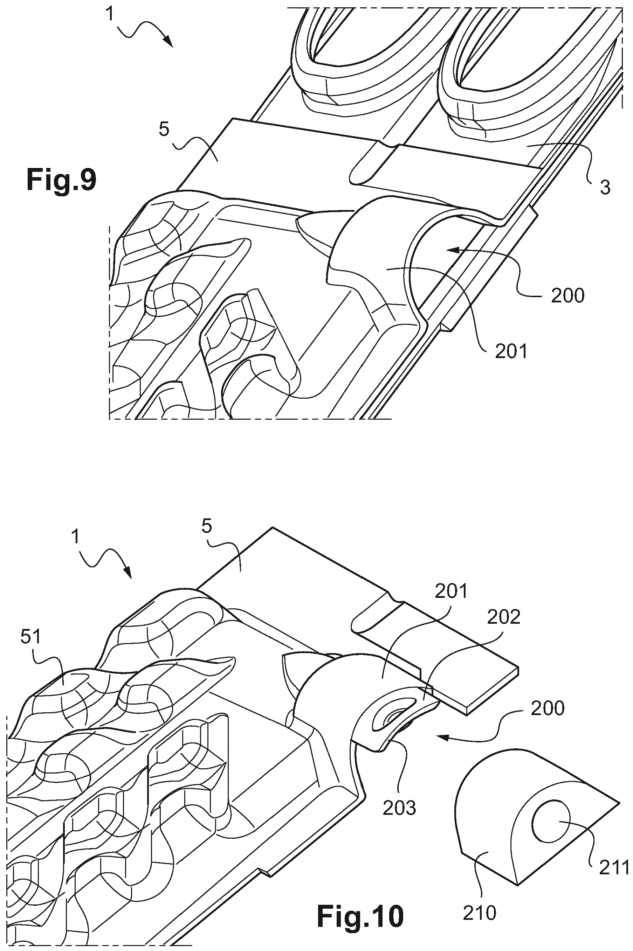

Afin d'introduire le matériau à changement de phase dans le tube à réservoir de matériau à changement de phase 1, ce dernier comporte en outre un canal de remplissage 200, comme illustré sur les figures 9 à 11b.

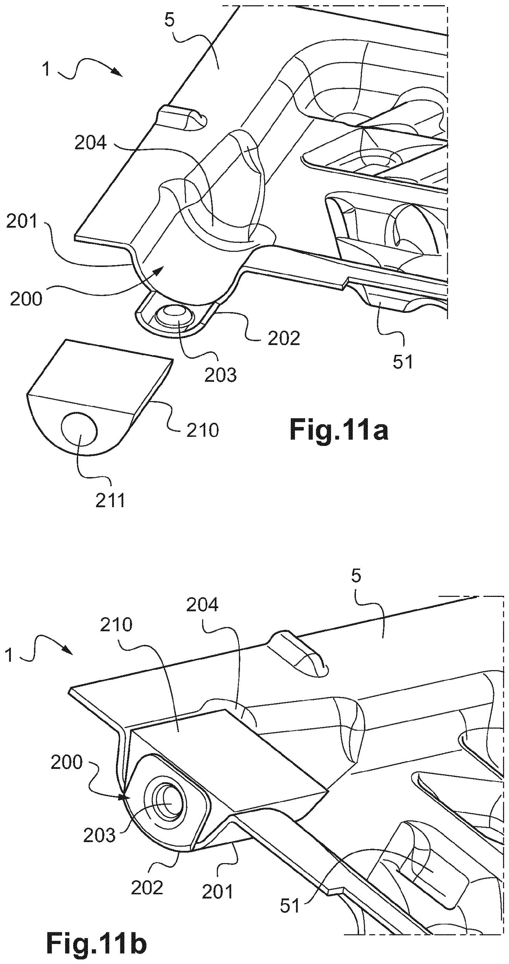

Pour une meilleure compréhension et visualisation, seule la plaque réservoir 5 est représentée sur les figures 10, 11a et 11b.

Une extrémité dudit canal de remplissage 200 débouche sur un des bords dudit tube à réservoir de matériau à changement de phase 1 de sorte à être accessible lorsque le tube à réservoir de matériau à changement de phase 1 est intégré au sein d'un faisceau d'échange de chaleur 100.

Le canal de remplissage 200 est formé d'une part, par un bec de remplissage 201 et d'autre part, par la face externe d'une des deux plaques de circulation 3. Le canal de remplissage 200 comporte en outre un bouchon 210 qui le ferme et empêche le matériau à changement de phase de s'échapper par ledit canal de remplissage 200.

Le canal de remplissage 200 et le bouchon 210 sont contenus dans un volume de largeur inférieure ou égale à la largeur du tube à réservoir de matériau à changement de phase 1 et de hauteur inférieure ou égale à la hauteur des logements du matériau à changement de phase, notamment des cavités 51. De ce fait, le canal de remplissage 200 ne dépasse ni en largeur ni en hauteur du tube à réservoir de matériau à changement de phase 1. Ainsi lorsque ledit tube à réservoir de matériau à changement de phase 1 est intégré au sein d'un faisceau d'échange de chaleur 100, le canal de remplissage 200 de dépasse pas et ne gêne pas.

Au sein d'un faisceau d'échange de chaleur 100, il est d'ailleurs avantageux de placer les tubes à réservoir de matériau à changement de phase 1 de telle sorte que le canal de remplissage 200 soit situé en position haute, c'est à dire le plus éloigné du sol. De cette manière, le remplissage en sera facilité et le risque de fuite au niveau dudit canal de remplissage 200 sera moindre.

Les plaques de circulation 3 et la plaque réservoir 5 sont de préférence réalisées en métal et sont obtenues par emboutissage. Le bec de remplissage 201 de la plaque réservoir 5 peut ainsi lui aussi être réalisé lors de l'emboutissage de ladite plaque réservoir 5. Les différentes plaques peuvent ainsi par exemple être fixées les unes aux autres par brasage.

Afin d'assurer une bonne fixation et une bonne étanchéité, le tube à réservoir de matériau à changement de phase 1 peut comporter une pâte de scellement et d'étanchéité entre le bec de remplissage 201 de la plaque réservoir 5 et le bouchon 210.

Le canal de remplissage 200 et plus précisément le bec de remplissage 201, comporte avantageusement une butée 204 en son sein. Cette butée 204 bloque le bouchon 210 qui ne peut aller plus profondément à l'intérieur du canal de remplissage 200. Le bouchon 210 a de préférence une longueur inférieure ou égale à la distance entre l'extrémité du canal de remplissage 200 et la butée 204 de sorte que ledit bouchon 210 ne dépasse pas dudit canal de remplissage 200.

Le bouchon 210 peut être réalisé par exemple en métal. De ce fait, ledit bouchon 210 métallique peut être fixé par brasage lors de l'étape où les plaques de circulation 3 et la plaque réservoir 5 sont fixées entre elles par brasage.

Le bouchon 210 peut également être réalisé en matériau élastomère ou plastique. Dans ce cas de figure, ledit bouchon 210 peut par exemple être de taille supérieure à celle du canal de remplissage 200 de sorte à ce que ledit bouchon 210 soit comprimé à l'intérieur du canal de remplissage 200. Cela du fait de cette compression, l'étanchéité au niveau du canal de remplissage 200 est assurée. Dans le cas de figure où le bouchon 210 est en matériau élastomère ou plastique, ce dernier est de préférence inséré dans le canal de remplissage 200 après la fixation des plaques de circulation 3 et de la plaque réservoir 5 entre elles par brasage.

Afin de maintenir le bouchon 210 au sein du canal de remplissage 200, ledit canal de remplissage 200 peut comporter une languette de maintien 202, comme illustrée sur les figure 10 à 11b. La languette de maintien 202 est rabattue sur l'extrémité dudit canal de remplissage 200 débouchant sur un des bords du tube à réservoir de matériau à changement de phase 1. Le bouchon 210 est ainsi bloqué entre la butée 205 et .la languette de maintien 202 comme le montre la figure 11b.

De préférence, la languette de maintien 202 vient de matière avec la plaque réservoir 5 et peut donc être réalisée en même temps que ladite plaque réservoir 5, par exemple par emboutissage.

Le bouchon 210 peut également comporter un orifice de remplissage 211 comme illustré sur les figures 10 à 11c. Cet orifice de remplissage 211 permet notamment l'insertion de matériau à changement de phase dans le tube à réservoir de matériau à changement de phase 1 alors que le bouchon 210 est déjà en place et fixé.

Lorsque le bouchon 211 ne présente pas d'orifice de remplissage 211, le matériau à changement de phase est par exemple inséré dans le tube à réservoir de matériau à changement de phase 1 avant la mise en place du bouchon 210, notamment lorsque ce dernier est en métal. Lorsque le bouchon 210 est en matériau élastomère ou plastique, le matériau à changement de phase peut être inséré via une aiguille traversant le bouchon 210, les propriétés élastiques du matériau élastomère ou plastique permettant de refermer l'espace créé lorsque l'aiguille est retirée, le bouchon conservant ainsi son étanchéité.

Lorsque le bouchon 211 présente un orifice de remplissage 211, le matériau à changement de phase peut être inséré dans le tube à réservoir de matériau à changement de phase 1 au travers dudit orifice de remplissage 211 après mise en place et fixation du bouchon 210.

La languette de maintien 202, lorsqu'elle est rabattue, recouvre avantageusement l'orifice de remplissage 211 du bouchon 210. La languette de maintien 202 ferme alors l'orifice de remplissage 211. Pour assurer une meilleur fermeture et étanchéité, la languette de maintien 202 peut comporter une projection 203 destinée à venir s'insérer au moins partiellement dans l'orifice de remplissage 211 du bouchon 210 lorsque ladite languette de maintien 202 est rabattue.

Ainsi on voit bien que grâce à la présence du canal de remplissage 200, le remplissage du tube à réservoir de matériau à changement de phase 1 en matériau à changement de phase est simple et facile à mettre en oeuvre. De plus le nombre limité d'éléments permet de limiter les coûts de production.

## Revendications

1. Tube à réservoir de matériau à changement de phase (1) pour faisceau d'échange de chaleur (100) d'un échangeur de chaleur, ledit tube à réservoir de matériau à changement de phase (1) comportant :
- deux plaques de circulation (3) configurées pour être assemblées l'une à l'autre de façon étanche et former au moins un conduit (31) dans lequel circule un premier fluide caloporteur,
- au moins une plaque réservoir (5), ladite plaque réservoir (5) étant configurée pour venir s'assembler de façon étanche sur une face externe d'une des deux plaques de circulation (3) de sorte à former des logements du matériau à changement de phase,
ledit tube à réservoir de matériau à changement de phase (1) comportant en outre un canal de remplissage (200) du matériau à changement de phase, une extrémité dudit canal de remplissage (200) débouchant sur un des bords dudit tube à réservoir de matériau à changement de phase (1),
**caractérisé en ce que**
ledit canal de remplissage (200) est formé d'une part par un bec de remplissage (201) de la plaque réservoir (5) vers l'extérieur et d'autre part par la face externe d'une des deux plaques de circulation (3), ledit canal de remplissage (200) comportant en outre un bouchon (210), ledit canal de remplissage (200) et ledit bouchon (210) étant contenus dans un volume de largeur inférieure ou égale à la largeur du tube à réservoir de matériau à changement de phase (1) et de hauteur inférieure ou égale à la hauteur des logements du matériau à changement de phase.

2. Tube à réservoir de matériau à changement de phase (1) selon la revendication 1, **caractérisé en ce que** le canal de remplissage (200) comporte une butée (204).

3. Tube à réservoir de matériau à changement de phase (1) selon l'une des revendications précédentes, **caractérisé en ce que** le bouchon (210) est réalisé en métal.

4. Tube à réservoir de matériau à changement de phase (1) selon la revendication précédente, **caractérisé en ce que** les plaques de circulation (3) ainsi que la plaque réservoir (5) sont également en métal et fixées entre elles par brasage, ledit bouchon (210) métallique étant également fixé lors du brasage desdites plaques entre elles.

5. Tube à réservoir de matériau à changement de phase (1) selon l'une des revendications 1 ou 2, **caractérisé en ce que** le bouchon (210) est réalisé en matériau élastomère ou plastique.

6. Tube à réservoir de matériau à changement de phase (1) selon la revendication précédente, **caractérisé en ce que** le bouchon (210) est de taille supérieure à celle du canal de remplissage (200) de sorte à être comprimé à l'intérieur dudit canal de remplissage (200).

7. Tube à réservoir de matériau à changement de phase (1) selon l'une des revendications précédentes, **caractérisé en ce que** le canal de remplissage (200) comporte une languette de maintien (202) rabattue sur l'extrémité dudit canal de remplissage (200) débouchant sur un des bords du tube à réservoir de matériau à changement de phase (1).

8. Tube à réservoir de matériau à changement de phase (1) selon la revendication précédente, **caractérisé en ce que** la languette de maintien (202) vient de matière avec la plaque réservoir (5).

9. Tube à réservoir de matériau à changement de phase (1) selon l'une des revendications précédentes, **caractérisé en ce que** le bouchon (210) comporte un orifice de remplissage (211).

10. Tube à réservoir de matériau à changement de phase (1) selon l'une des revendications 7 ou 8, prise en combinaison avec la revendication 9 **caractérisé en ce que** rabattue, la languette de maintien (202) recouvre l'orifice de remplissage (211) du bouchon (210).

11. Tube à réservoir de matériau à changement de phase (1) selon la revendication précédente, **caractérisé en ce que** la languette de maintien (202) comporte une projection (203) destinée à venir s'insérer au moins partiellement dans l'orifice de remplissage (211) du bouchon (210) lorsque ladite languette de maintien (202) est rabattue.

12. Tube à réservoir de matériau à changement de phase (1) selon l'une des revendications précédentes, **caractérisé en ce qu'**il comporte une pâte de scellement et d'étanchéité entre le bec de remplissage (201) de la plaque réservoir (5) et le bouchon (210).

## Patentansprüche

1. Rohr mit Phasenwechselmaterialspeicher (1) für ein Wärmetauscherbündel (100) eines Wärmetauschers, wobei das Rohr mit Phasenwechselmaterialspeicher (1) aufweist:
- zwei Strömungsplatten (3), die konfiguriert sind, um dicht zusammengebaut zu werden und mindestens eine Leitung (31) zu bilden, in der ein erstes Wärmeträgerfluid strömt,
- mindestens eine Speicherplatte (5), wobei die Speicherplatte (5) konfiguriert ist, um dicht auf eine Außenseite einer der zwei Strömungsplatten (3) montiert zu werden, um Aufnahmen des Phasenwechselmaterials zu formen,
wobei das Rohr mit Phasenwechselmaterialspeicher (1) außerdem einen Einfüllkanal (200) des Phasenwechselmaterials aufweist, wobei ein Ende des Einfüllkanals (200) an einem der Ränder des Rohrs mit Phasenwechselmaterialspeicher (1) mündet,
**dadurch gekennzeichnet, dass** der Einfüllkanal (200) einerseits von einem Einfüllstutzen (201) der Speicherplatte (5) nach außen und andererseits von der Außenseite einer der zwei Strömungsplatten (3) gebildet wird, wobei der Einfüllkanal (200) außerdem einen Stopfen (210) aufweist, wobei der Einfüllkanal (200) und der Stopfen (210) in einem Volumen einer Breite geringer als die oder gleich der Breite des Rohrs mit Phasenwechselmaterialspeicher (1) und einer Höhe geringer als die oder gleich der Höhe der Aufnahmen des Phasenwechselmaterials enthalten sind.

2. Rohr mit Phasenwechselmaterialspeicher (1) nach Anspruch 1, **dadurch gekennzeichnet, dass** der Einfüllkanal (200) einen Anschlag (204) aufweist.

3. Rohr mit Phasenwechselmaterialspeicher (1) nach einem der vorhergehenden Ansprüche, **dadurch gekennzeichnet, dass** der Stopfen (210) aus Metall hergestellt ist.

4. Rohr mit Phasenwechselmaterialspeicher (1) nach dem vorhergehenden Anspruch, **dadurch gekennzeichnet, dass** die Strömungsplatten (3) sowie die Speicherplatte (5) ebenfalls aus Metall und durch Löten aneinander befestigt sind, wobei der metallische Stopfen (210) beim Aneinanderlöten der Platten ebenfalls befestigt wird.

5. Rohr mit Phasenwechselmaterialspeicher (1) nach einem der Ansprüche 1 oder 2, **dadurch gekennzeichnet, dass** der Stopfen (210) aus Elastomermaterial oder Kunststoff hergestellt ist.

6. Rohr mit Phasenwechselmaterialspeicher (1) nach dem vorhergehenden Anspruch, **dadurch gekennzeichnet, dass** der Stopfen (210) größer ist als der Einfüllkanal (200), so dass er im Inneren des Einfüllkanals (200) komprimiert wird.

7. Rohr mit Phasenwechselmaterialspeicher (1) nach einem der vorhergehenden Ansprüche, **dadurch gekennzeichnet, dass** der Einfüllkanal (200) eine Haltezunge (202) aufweist, die auf das Ende des Einfüllkanals (200) umgeschlagen ist, das an einem der Ränder des Rohrs mit Phasenwechselmaterialspeicher (1) mündet.

8. Rohr mit Phasenwechselmaterialspeicher (1) nach dem vorhergehenden Anspruch, **dadurch gekennzeichnet, dass** die Haltezunge (202) aus einem Stück mit der Speicherplatte (5) hergestellt wird.

9. Rohr mit Phasenwechselmaterialspeicher (1) nach einem der vorhergehenden Ansprüche, **dadurch gekennzeichnet, dass** der Stopfen (210) eine Einfüllöffnung (211) aufweist.

10. Rohr mit Phasenwechselmaterialspeicher (1) nach einem der Ansprüche 7 oder 8 in Kombination mit Anspruch 9, **dadurch gekennzeichnet, dass** die Haltezunge (202) im umgeschlagenen Zustand die Einfüllöffnung (211) des Stopfens (210) bedeckt.

11. Rohr mit Phasenwechselmaterialspeicher (1) nach dem vorhergehenden Anspruch, **dadurch gekennzeichnet, dass** die Haltezunge (202) einen Vorsprung (203) aufweist, der dazu bestimmt ist, sich zumindest teilweise in die Einfüllöffnung (211) des Stopfens (210) einzufügen, wenn die Haltezunge (202) umgeschlagen ist.

12. Rohr mit Phasenwechselmaterialspeicher (1) nach einem der vorhergehenden Ansprüche, **dadurch gekennzeichnet, dass** es eine Versiegelungs- und Abdichtpaste zwischen dem Einfüllstutzen (201) der Speicherplatte (5) und dem Stopfen (210) aufweist.

## Claims

1. Tube with a reservoir of phase-change material (1) for a heat exchange bundle (100) of a heat exchanger, said tube with a reservoir of phase-change material (1) comprising:
- two flow plates (3) configured to be assembled with one another in a sealed manner and to form at least one conduit (31) in which a first heat transfer fluid flows,
- at least one reservoir plate (5), said reservoir plate (5) being configured to be assembled in a sealed manner onto an external face of one of the two flow plates (3) so as to form housings for the phase-change material,
said tube with a reservoir of phase-change material (1) further comprising a filling duct (200) for the phase-change material, one end of said filling duct (200) opening into one of the edges of said tube with a reservoir of phase-change material (1),
**characterized in that** said filling duct (200) is formed, on the one hand, by a filling spout (201) of the reservoir plate (5) towards the outside and, on the other hand, by the external face of one of the two flow plates (3), said filling duct (200) further comprising a plug (210), said filling duct (200) and said plug (210) being contained within a volume of width smaller than or equal to the width of the tube with a reservoir of phase-change material (1) and of height less than or equal to the height of the housings of the phase-change material.

2. Tube with a reservoir of phase-change material (1) according to Claim 1, **characterized in that** the filling duct (200) comprises a stop (204).

3. Tube with a reservoir of phase-change material (1) according to either of the preceding claims, **characterized in that** the plug (210) is produced in metal.

4. Tube with a reservoir of phase-change material (1) according to the preceding claim, **characterized in that** the flow plates (3) and the reservoir plate (5) are also made of metal and fixed together by brazing, said metal plug (210) also being fixed during the brazing of said plates together.

5. Tube with a reservoir of phase-change material (1) according to either of Claims 1 and 2, **characterized in that** the plug (210) is produced in an elastomer or plastics material.

6. Tube with a reservoir of phase-change material (1) according to the preceding claim, **characterized in that** the plug (210) is of a size greater than that of the filling duct (200) so as to be compressed inside said filling duct (200).

7. Tube with a reservoir of phase-chase material (1) according to one of the preceding claims, **characterized in that** the filling duct (200) comprises a retention tongue (202) which is folded back onto the end of said filling duct (200) opening into one of the edges of the tube with a reservoir of phase-change material (1).

8. Tube with a reservoir of phase-change material (1) according to the preceding claim, **characterized in that** the retention tongue (202) is made of the same material as the reservoir plate (5).

9. Tube with a reservoir of phase-change material (1) according to one of the preceding claims, **characterized in that** the plug (210) comprises a filling orifice (211) .

10. Tube with a reservoir of phase-change material (1) according to either of Claims 7 and 8, taken in combination with Claim 9, **characterized in that**, when it is folded back, the retention tongue (202) covers the filling orifice (211) of the plug (210).

11. Tube with a reservoir of phase-change material (1) according to the preceding claim, **characterized in that** the retention tongue (202) comprises a projection (203) designed to be inserted at least partially into the filling orifice (211) of the plug (210) when said retention tongue (202) is folded back.

12. Tube with a reservoir of phase-change material (1) according to one of the preceding claims, **characterized in that** it comprises a filling and sealing compound between the filling spout (201) of the reservoir plate (5) and the plug (210).
